# FASCICULE DE BREVET EUROPEEN

(11) **EP 2 156 375 B1**
(45) Date de publication et mention de la délivrance du brevet: **07.08.2013**
(21) Numéro de dépôt: 08805589.2
(22) Date de dépôt: 20.05.2008
(51) Int. Cl.: G06K 19/077

(54) **VIGNETTE ADHESIVE SOUPLE DE SECURITE DOTEE D'AU MOINS UN MICROCIRCUIT SANS CONTACT POUR DOCUMENT OFFICIEL**
MIT MINDESTENS EINER KONTAKTLOSEN MIKROSCHALTUNG AUSGESTATTETES FLEXIBLES KLEBEETIKETT FÜR SICHERHEIT FÜR EIN OFFIZIELLES DOKUMENT
FLEXIBLE ADHESIVE LABEL FOR SECURITY FURNISHED WITH AT LEAST ONE CONTACTLESS MICROCIRCUIT FOR AN OFFICIAL DOCUMENT

(30) Priorité: 21.05.2007 FR 0703585
(43) Date de publication de la demande: 24.02.2010
(73) Titulaire: Fasver, 34670 Baillargues (FR)
(72) Inventeur: TRANTOUL, François, F-34400 Lunel (FR); LEROY, Jean-Yves, F-34160 Restinclieres (FR)
(74) Mandataire: Cabinet BARRE LAFORGUE & associés
(86) Numéro de dépôt international: PCT/FR2008/000697
(87) Numéro de publication internationale: WO 2009/004139

(56) Documents cités:
- EP-A- 1 054 346
- WO-A-2006/123065
- FR-A- 2 868 987
- US-A- 5 682 296
- US-A1- 2005 128 086

## Description

L'invention concerne une vignette adhésive souple de sécurité anti-falsification destinée à être appliquée sur une feuille souple imprimable -notamment en papier- d'un document officiel tel qu'un passeport ou autre. Elle s'étend à un document officiel comprenant au moins une telle vignette.

Une vignette adhésive de sécurité anti-falsification permet d'associer à un objet au moins un microcircuit relié à au moins une antenne de transmission sans contact à distance d'informations et/ou de signaux et/ou d'énergie pouvant être délivré(e)(s) et/ou reçu(e)(s)(es) par ce microcircuit, de façon à protéger ledit document officiel des tentatives de falsification, et/ou à garantir son authenticité, et/ou à garantir l'authenticité d'inscriptions portées par ce document officiel et/ou à garantir l'intégrité de telles inscriptions.

Un document officiel peut être par exemple un passeport, un visa, une carte d'identité, un permis de conduire, une étiquette, un acte légal, un contrat, un plan cadastral, un plan de fabrication ou autre plan..., comprenant au moins une feuille souple imprimable -notamment en papier- et incorporant des informations -notamment portant des inscriptions à lire telles que des mentions variables (noms, prénoms, adresse, photos,... d'un titulaire ou des parties à un contrat...) et/ou des mentions communes (motifs sécuritaires, matrices, cadres, noms de champ, sceaux, hologrammes,...)- à protéger contre les tentatives de falsification et/ou à des fins d'authentification et/ou pour garantir leur intégrité (c'est-à-dire le fait qu'elles n'ont pas été altérées ou modifiées).

Dans tout le texte, on désigne par « inscription à lire » tout signe ou motif réalisé sur une face d'un objet -notamment d'un document- pouvant être lu par l'homme au moins sous certaines conditions (notamment sous éclairage normal en lumière visible ; et/ou sous éclairage spécifique ; et/ou après activation d'un dispositif électronique (écran) ou autre...). Il peut s'agir par exemple en particulier de textes (écriture manuelle ou caractères imprimés) ; codes (ASCII, code universel à lectures optoélectroniques tels que codes à barres...) ; images ou photographies... ; ou autres informations, susceptibles aussi d'être au moins partiellement représentées par des données numériques enregistrables. Le terme « antenne » désigne de façon générale toute ligne électriquement conductrice permettant de réaliser un couplage électromagnétique -notamment inductif et/ou magnétique- avec un autre dispositif électromagnétique. Le terme « vignette » désigne tout article présentant la forme générale d'une feuille de format plus petit que le format A4. Une vignette peut former un ticket, une étiquette adhésive, un film de protection, un insert destiné à être placé entre deux couches ou feuilles... Le terme « microcircuit » désigne tout dispositif de taille inférieure à 5 mm x 5 mm x 1 mm formant un circuit électronique réalisé essentiellement selon les technologies des circuits intégrés. Il peut s'agir en particulier d'une puce à mémoire (ROM, RAM, EPPROM, flash...), et/ou à microprocesseur et/ou à logique câblée, dotée ou non d'autres fonctions non électroniques ou accessoires (antenne) ou de plusieurs puces associées pour former un tel dispositif.

On connaît déjà différents dispositifs et procédés permettant d'associer au moins un microcircuit à un document officiel, en particulier avec au moins une antenne de transmission sans contact à distance.

La demande de brevet FR 2886038 décrit une vignette adhésive souple de sécurité anti-falsification comprenant :
- une première feuille souple dont le format correspond au moins sensiblement à celui de la vignette,
- au moins une antenne de transmission à distance d'informations et/ou de signaux et/ou d'énergie pouvant être délivré(e)(s) et/ou reçu(e)(s)(es) par un microcircuit, cette antenne de transmission présentant des bornes de connexion électrique associées à une première face de ladite première feuille,
- au moins un microcircuit fixé sur ladite première face de la première feuille de façon à être en contact électrique avec des bornes de connexion électrique d'une antenne de transmission correspondante,
- une couche d'adhésif externe recouvrant la deuxième face, opposée à la première face, de ladite première feuille, pour permettre le collage de la vignette adhésive sur une face d'un objet tel qu'une feuille de document officiel.

Dans un mode de réalisation décrit dans ce document, la vignette comprend deux couches d'adhésif externe, dont une couche d'adhésif externe recouvrant la deuxième face, opposée à la première face, de ladite première feuille. Cette vignette adhésive biface peut être collée entre deux feuilles d'un carnet. Dans les autres modes de réalisation décrits dans ce document la vignette comprend une seule couche d'adhésif externe qui recouvre le microcircuit et différentes couches de vernis de compensation d'épaisseur, ces dernières étant réalisées à partir de ladite première face de la première feuille en présentant un logement de réception du microcircuit.

Il s'avère cependant en pratique que la fabrication d'une telle vignette est relativement complexe et onéreuse.

En outre, l'utilisation d'une telle vignette, par exemple dans un document officiel de voyage tel qu'un passeport, suppose en général que la vignette soit intégrée dans la couverture du passeport ou insérée entre deux feuilles contrecollées l'une sur l'autre. Dans ce dernier cas, il en résulte un feuillet d'épaisseur importante relativement rigide, ce qui nuit à la qualité générale du document officiel et permet de détecter la présence du microcircuit.

Par ailleurs, cette vignette connue ne peut pas être utilisée de façon économique pour modifier des passeports déjà fabriqués en les dotant d'au moins un microcircuit. Or, il est à noter qu'en général, les imprimeurs des documents officiels tels que les documents de voyage, en particulier les passeports, fabriquent ces documents avec des stocks relativement importants. Il n'est pas rare qu'un État dispose de plusieurs années de stock de passeports. De surcroît, dans chaque État, il existe souvent différentes natures de passeports : les passeports ordinaires, les passeports de service, les passeports diplomatiques, les passeports d'urgence... Or, ces différents passeports ne doivent pas tous présenter le même niveau de sécurité. Certains doivent être équipés d'un microcircuit, d'autres non.

Également, la demande de brevet FR 2868987 décrit une structure comportant un dispositif électronique, une couche intercalaire au moins partiellement fibreuse avec une fenêtre dans laquelle s'étend au moins partiellement le dispositif électronique, et une couche d'adhésif en contact avec la couche intercalaire. Une telle structure qui prévoit une couche intercalaire fibreuse, c'est-à-dire notamment en papier, de compensation d'épaisseur pour le dispositif électronique, est peu souple, modifie la souplesse du document sur lequel elle est éventuellement apposée, et résiste mal aux tentatives de falsification par délamination, puisque la couche intercalaire épaisse (de l'ordre de 200 µm au moins) facilite les opérations de délamination. La demande de brevet EP 1 054 346 A2 décrit une carte à puce sans contact comprenant une couche centrale faite de résine, une antenne, une puce et deux couches de recouvrements comprenant chacune une couche adhésive liée chacune à une face de la couche centrale. Dans ce contexte, l'invention vise à proposer une vignette adhésive souple de sécurité anti-falsification incorporant au moins un microcircuit et destinée à être appliquée sur une feuille souple imprimable -notamment en papier- d'un document officiel tel qu'un passeport ou autre, présentant une grande résistance aux tentatives de falsification et dont les coûts de fabrication sont réduits.

Plus particulièrement, l'invention vise à proposer une telle vignette qui permette de faciliter la modification de documents officiels préalablement fabriqués, pour l'insertion de microcircuits à moindre coût, et ce quelle que soit la technologie utilisée pour la réalisation de ces documents officiels et/ou quelles que soient la nature et la destination de ces documents officiels. En ce sens, l'invention vise donc à faciliter la fabrication des documents officiels et à en diminuer les coûts de fabrication.

L'invention vise également à proposer une telle vignette plus particulièrement adaptée pour permettre l'insertion de façon invisible d'au moins un microcircuit dans un document physique officiel, la vignette se présentant comme un support d'impression normal du document officiel.

Pour ce faire, l'invention concerne une vignette adhésive souple de sécurité anti-falsification comprenant :
- une première feuille souple dont le format correspond au moins sensiblement à celui de la vignette,
- au moins une antenne de transmission à distance d'informations et/ou de signaux et/ou d'énergie pouvant être délivré(e)(s) et/ou reçu(e)(s)(es) par un microcircuit, cette antenne de transmission présentant des bornes de connexion électrique associées à une première face de ladite première feuille,

- au moins un microcircuit fixé sur ladite première face de la première feuille de façon à être en contact électrique avec des bornes de connexion électrique d'une antenne de transmission correspondante,
- une couche d'adhésif externe recouvrant la deuxième face, opposée à la première face, de ladite première feuille, cette couche d'adhésif externe étant adaptée pour permettre le collage de la vignette adhésive sur une face d'une feuille souple imprimable de document officiel,
caractérisée en ce que ladite première feuille et chaque microcircuit sont recouverts d'une deuxième feuille souple imprimable -notamment en papier- contrecollée par l'intermédiaire d'une couche d'adhésif sur ladite première face de ladite première feuille et sur chaque microcircuit, ladite couche d'adhésif adhérant simultanément à l'antenne de transmission et à chaque microcircuit et faisant office de compensation d'épaisseur pour chaque microcircuit.

L'invention permet ainsi d'obtenir, à moindre coût, une vignette pouvant servir elle-même de support d'impression après avoir été apposée sur une feuille d'un document officiel, cette vignette comprenant au moins un microcircuit parfaitement protégé, invisible, noyé dans l'épaisseur de la vignette, qui conserve ses fonctionnalités au cours des différentes manipulations du document officiel, la souplesse de ce dernier n'étant sensiblement pas affectée par la vignette, notamment par le microcircuit. Une vignette selon l'invention est en effet souple c'est-à-dire en particulier ni rigide ni semi-rigide. Sa souplesse correspond de préférence au moins sensiblement à celle de la feuille du document officiel sur laquelle elle est destinée à être appliquée. Elle ne génère qu'une faible surépaisseur.

Du point de vue du coût de fabrication, il est à noter que dans une vignette selon l'invention, la pose d'un microcircuit est particulièrement simple et économique, et que le nombre de couches constituant la vignette peut être réduit au minimum. En particulier, la couche d'adhésif permettant de fixer la deuxième feuille souple sur la première feuille souple peut faire office de compensation d'épaisseur pour chaque microcircuit, en enrobant ce dernier et en le protégeant. Un tel montage confère aussi une grande résistance aux tentatives de falsification, dans la mesure où cette couche d'adhésif adhérant simultanément à l'antenne de transmission imprimée et à chaque microcircuit, toute tentative de délamination d'une vignette selon l'invention a pour conséquence que le fonctionnement du microcircuit se trouve définitivement altéré.

En particulier, avantageusement et selon l'invention, l'antenne de transmission est formée d'au moins une spire d'encre conductrice imprimée sur ladite première face de ladite première feuille et lesdites bornes de connexion sont formées également d'une encre conductrice imprimée sur ladite première face de ladite première feuille. Ainsi, dans un mode de réalisation particulièrement avantageux de l'invention, l'antenne de transmission est simplement imprimée sur ladite première face de ladite première feuille.

Par ailleurs, avantageusement et selon l'invention, chaque microcircuit est fixé sur ladite première face de ladite première feuille par collage, par exemple à l'aide d'une colle non électriquement conductrice. Ce microcircuit présente des bornes de connexion venant alors directement au contact des bornes de connexion de l'antenne préalablement imprimée. Autrement dit, le microcircuit est fixé sur ladite première face de la première feuille par un montage de type dit « flip-chip ». Un tel montage est particulièrement simple et économique.

Avantageusement, une vignette selon l'invention, comprend au moins une couche de renfort périphérique s'étendant autour d'au moins un microcircuit fixé sur ladite première face selon un format inférieur à celui de ladite première feuille, l'ensemble formé par chaque couche de renfort périphérique formant à partir de ladite première face de ladite première feuille, une épaisseur totale supérieure ou égale à celle du microcircuit à partir de ladite première face de ladite première feuille.

De préférence, l'ensemble formé par chaque couche de renfort périphérique présente une rigidité en flexion supérieure à celle de ladite première feuille.

Selon un mode de réalisation de l'invention, la vignette comprend, à titre de couche(s) de renfort périphérique, au moins une bande de renfort périphérique de vernis imprimée en au moins une couche autour du microcircuit.

Dans un autre mode de réalisation avantageux, une vignette selon l'invention comprend, à titre de couche(s) de renfort périphérique, une pastille de renfort périphérique adhérant sur ladite première face autour d'un microcircuit, ladite pastille présentant un évidement logeant le microcircuit et ayant un format inférieur à celui de ladite première feuille. En outre, avantageusement et selon l'invention, ladite pastille est formée d'une pièce collée sur ladite première face de ladite première feuille.

Avantageusement et selon l'invention, ladite pastille est formée en une matière choisie dans le groupe comprenant les polyesters, les polyméthacrylates, les polycarbonates, les polystyrènes, les polyéthylènes, les polypropylènes et les polyamides. Plus particulièrement, de préférence, et selon l'invention, cette matière est choisie dans le groupe formé des polyesters, des polycarbonates et des polypropylènes. En particulier, cette pastille n'est pas formée d'un chlorure de polyvinyle, une telle matière étant soit trop souple, soit trop rigide, et ne conservant pas ses propriétés dans le temps. De bons résultats ont été obtenus avec unc pastille réalisée en polyester.

L'ensemble formé par chaque couche de renfort périphérique, et en particulier ladite pastille, peut présenter toute forme appropriée à l'application envisagée de la vignette dans l'invention. Avantageusement, l'ensemble formé par chaque couche de renfort périphérique est en forme générale de disque ou polygonal et/ou présente un contour brisé ou ondulé ou autre. De même, les dimensions générales de cet ensemble -notamment de cette pastille- sont variables en fonction de l'application envisagée de la vignette selon l'invention. Dans un mode de réalisation avantageux, l'ensemble formé par chaque couche de renfort périphérique -notamment ladite pastille- présente une largeur hors-tout comprise entre 10 mm et 30 mm - notamment de l'ordre de 20 à 25 mm-.

En outre, avantageusement et selon l'invention, l'ensemble formé par chaque couche de renfort périphérique -notamment ladite pastille- présente une épaisseur totale comprise entre 100 µm et 250 µm -notamment de l'ordre de 180 µm-.

Par ailleurs, dans un mode de réalisation préférentiel et selon l'invention, ladite deuxième feuille est formée d'un papier de sécurité ayant une densité d'au moins 90 g/m². Un papier de sécurité est un papier adapté pour résister aux tentatives de falsification par exemple un papier exempt d'azurant optique et/ou à faible cohésion interne et/ou contenant des filigranes et/ou des fils de sécurité et/ou des fibres de sécurité et/ou des agents chimiquement réactifs... En outre, avantageusement et selon l'invention, ladite deuxième feuille porte des impressions de motifs de sécurité anti-falsification sur sa face externe libre.

Par ailleurs, avantageusement et selon l'invention, la première feuille et la deuxième feuille sont de formats similaires correspondant approximativement à celui d'une feuille de document officiel sur laquelle ladite vignette est destinée à être apposée. Par exemple, notamment dans le cas d'une vignette destinée à être insérée dans un passeport, la première feuille et la deuxième feuille sont de format inférieur à A4 -notamment à un format de l'ordre de 88 mm x 125 mm, ou légèrement supérieur à ce format (pour pouvoir être ensuite découpé exactement à ce format) ou inférieur à ce format-.

L'invention s'étend également à un document officiel -notamment passeport, permis de conduire, certificat d'immatriculation de véhicule, diplôme, certificat administratif et/ou d'identification et/ou d'authentification, contrat-, caractérisé en ce qu'il comprend au moins une vignette selon l'invention appliquée sur une face d'une feuille souple imprimable -notamment en papier- de ce document officiel. L'invention concerne plus particulièrement un tel document officiel se présentant sous la forme d'un carnet, par exemple un passeport.

L'invention concerne également une vignette et un document officiel caractérisés en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées représentant, à titre d'exemple non limitatif, un mode de réalisation de l'invention, et dans lesquelles :
- la figure 1 est un schéma en coupe transversale d'une vignette selon l'invention,
- la figure 2 est une vue schématique de dessus de la vignette de la figure 1, avec un arraché partiel présentant le microcircuit,
- la figure 3 est un schéma en perspective d'un document officiel selon l'invention sous forme de carnet dont une page reçoit une vignette selon l'invention.

Sur les figures, les épaisseurs sont exagérées et les échelles d'épaisseur ne sont pas respectées, et ce à des fins d'illustration.

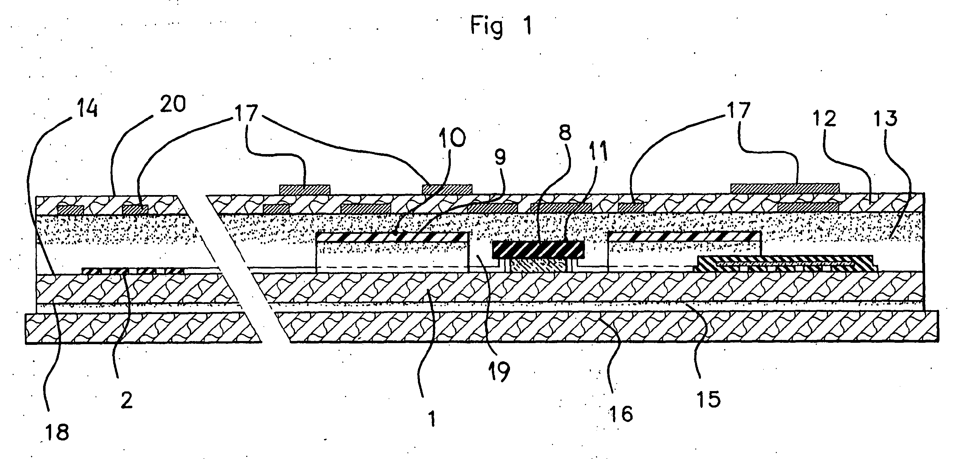

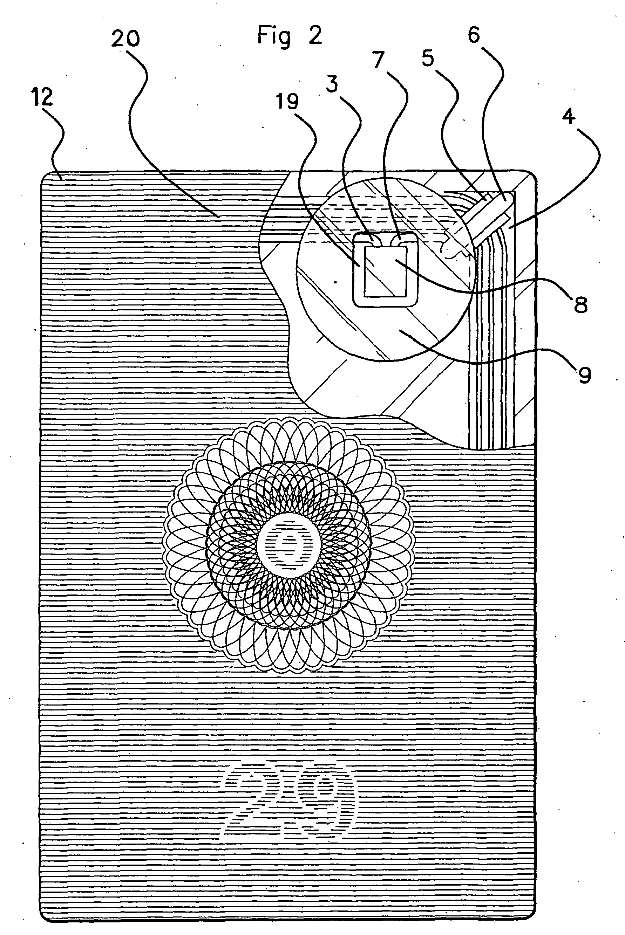

La vignette selon l'invention représentée figures 1 et 2 comprend tout d'abord une première feuille souple 1 définissant le format hors-tout de la vignette, plus petit que le format A4 et adapté à l'utilisation envisagée de la vignette. Cette première feuille souple 1 est adaptée pour pouvoir former un support d'impression, et pour pouvoir recevoir un microcircuit 8 et une deuxième feuille souple adhésive 12, 13 comme décrit ci-après. Dans l'exemple représenté, la première feuille souple 1 peut être formée d'une feuille de papier, par exemple de 90 g/m², ou de polyester ou autre matière synthétique souple, de format correspondant à celui d'une feuille de passeport, par exemple de l'ordre de 88 mm x 125 mm.

Sur une première face 14 de cette première feuille souple 1, sont imprimées, avec une encre conductrice, une pluralité de spires concentriques formant une antenne 2 de transmission sans contact à distance. Les caractéristiques et dimensions de cette antenne de transmission 2 sont adaptées en fonction de l'application envisagée, en particulier en fonction de la fréquence de fonctionnement, de la nature des informations et/ou des signaux et/ou de l'énergie à échanger par l'intermédiaire de cette antenne de transmission 2, de la portée que l'antenne de transmission 2 doit présenter... Avantageusement, l'antenne de transmission 2 est réalisée de façon à présenter une fréquence d'accord de l'ordre de 13,56 MHz. Cette fréquence correspond en particulier aux normes ISO 15693, ISO 14443 A et ISO 14443 B. Pour obtenir cette fréquence, on ajuste la largeur et l'épaisseur de la bande d'encre conductrice formant l'antenne de transmission 2, ainsi que la dimension des spires et la distance entre les spires de façon bien connue en soi. Cette encre conductrice peut-être imprimée selon tout procédé connu, par exemple en sérigraphie en une ou plusieurs étapes successives. Par exemple, pour imprimer cette antenne de transmission 2, on utilise une composition d'encre conductrice à base solvant référence 5029 commercialisée par la société du Pont de Nemours (Bristol, Grande-Bretagne) imprimée en sérigraphie. Dans l'exemple représenté, les spires sont de forme globalement rectangulaire s'étendant auprès de la bordure périphérique de la première feuille souple 1. Rien n'empêche de prévoir une antenne 2 formée de spires d'une autre forme, par exemple circulaire ou autre.

Les spires formant l'antenne de transmission 2 présentent une première extrémité interne 3 et une deuxième extrémité externe 4, ces deux extrémités 3, 4 étant à proximité l'une de l'autre. Une bande de vernis électriquement isolant 5 recouvre les spires à proximité de l'extrémité externe 4, et cette bande de vernis isolant 5 est recouverte d'une bande de liaison 6 d'encre électriquement conductrice reliée à l'extrémité externe 4 et dont l'extrémité opposée 7 est à proximité immédiate de l'extrémité interne 3 des spires formant l'antenne 2, de sorte que ces extrémités 3, 7 qui se jouxtent constituent des bornes de connexion 3, 7 pour un microcircuit 8.

Ce microcircuit 8 peut-être fixé par une colle (électriquement isolante ou conductrice) sur la première feuille souple 1 entre les deux bornes de connexion 3, 7 selon un montage du type dit « flip-chip » de façon bien connue en soi. Le microcircuit 8 est par exemple une puce commercialisée sous la marque Smartmx® 72 ko à microprocesseur par la société Philips Europe (Graz, Autriche) ; ou une puce commercialisée sous la marque Picopass® 4 ko à mémoire par la société Inside (Aix-en-Provence, France) ; ou tout autre microcircuit approprié à l'utilisation de la vignette.

La première feuille souple 1 est dotée, sur sa deuxième face 18 opposée à celle 14 recevant le microcircuit 8, d'une couche d'adhésif 15 protégée par une feuille détachable 16, par exemple une feuille de papier siliconé. Cette couche d'adhésif 15 peut-être formée d'un adhésif sensible à la pression à froid ou d'un adhésif activable à chaud ou autre. La vignette selon l'invention est donc une étiquette adhésive. Elle peut être par exemple collée sur une page de passeport.

Pour renforcer localement la vignette autour du microcircuit 8, une pastille 9 adhésive de renfort périphérique est appliquée sur la première feuille souple 1 au-dessus du microcircuit 8 à recouvrement des portions sous-jacentes de l'antenne 2.

La pastille 9 présente un évidement 19 logeant le microcircuit 8 de façon à ne pas créer de surépaisseur au-dessus du microcircuit 8. Pour faciliter la fabrication de la pastille 9, cet évidement 19 peut-être formé d'une simple lumière 19 de forme correspondant à celle du microcircuit 8 et traversant l'épaisseur de la pastille 9 en partie centrale.

Cette pastille 9 de renfort périphérique présente une épaisseur totale (y compris la couche d'adhésif permettant de la solidariser au support souple 1) légèrement supérieure à celle formée par l'antenne 2, le microcircuit 8 et la colle qui le fixe sur la première feuille souple 1, de façon que la face supérieure libre 10 de la pastille 9 soit située, par rapport au support souple 1, à un niveau légèrement supérieur à la face supérieure libre 11 du microcircuit 8. En conséquence, la pastille 9 de renfort périphérique réalise une compensation d'épaisseur autour du microcircuit 8. À titre d'exemple, la pastille 9 présente une épaisseur totale comprise entre 100 µm et 250 µm, typiquement de l'ordre de 180 µm.

Le format de la pastille 9 est inférieur à celui de la première feuille souple 1. En effet, la dimension donnée à la pastille 9 est suffisante pour renforcer localement la vignette autour du microcircuit 8, compte tenu des impératifs mécaniques requis pour la vignette, mais aussi faible que possible, pour préserver la souplesse de la première feuille souple 1.

En pratique, une pastille 9 s'étendant latéralement autour du microcircuit 8 dans toutes les directions sur une distance comprise entre une fois et trois fois la largeur du microcircuit 8 procure d'excellents résultats. Ainsi, la pastille 9 peut présenter une largeur totale hors-tout comprise entre 10 mm et 30 mm -notamment de l'ordre de 20 à 25 mm-. La pastille 9 peut présenter toute forme appropriée, et par exemple peut-être en forme générale de disque ou polygonale ou autre.

La pastille 9 de renfort périphérique s'étend ainsi selon une aire hors-tout inférieure à 10 cm² et inférieure à 25%, de préférence inférieure à 10%, de l'aire de la première feuille souple 1.

Le matériau constitutif de la pastille 9 est choisi en fonction des propriétés requises pour cette pastille 9, à savoir une bonne résistance en compression, et une rigidité en flexion suffisante pour protéger le microcircuit 8 sans pour autant nuire aux propriétés de souplesse requises pour la vignette. De préférence, la pastille 9 présente une rigidité en flexion supérieure ou égale à celle de la première feuille souple 1. Cette rigidité supérieure peut tout d'abord être conférée par une épaisseur plus importante. Elle peut aussi être le résultat du choix d'un matériau distinct. Avantageusement et selon l'invention, la pastille 9 est formée d'un matériau choisi dans le groupe comprenant les polyesters, les polyméthacrylates, les polycarbonates, les polystyrènes, les polyéthylènes, les polypropylènes et les polyamides.

La pastille 9 peut être formée d'une couche ou d'une pluralité de couches superposées. Chaque couche peut être une portion de film ou de feuille découpée ou une couche imprimée. À titre d'exemple, la pastille 9 peut-être formée à partir d'une feuille de polyester de 50 µm à 75 µm d'épaisseur dotée d'une couche d'adhésif transfert de 50 µm à 125 µm d'épaisseur.

Le microcircuit 8, la pastille 9 et l'antenne de transmission 2 sont par ailleurs recouverts d'une feuille adhésive 12, 13. Cette feuille adhésive 12, 13 comprend une deuxième feuille souple imprimable 12, par exemple formée d'un papier en une seule ou plusieurs couches, d'une couche ou d'un complexe stratifié de plusieurs couches de matériau(x) fibreux, à base de fibres cellulosiques ou de matières polymériques thermoplastiques, tissé(s), ou non-tissé(s) (fibres agglomérées dans un liant). Cette deuxième feuille souple 12 est découpée selon un format correspondant au moins sensiblement à celui de la première feuille souple 1. Le matériau constitutif de la deuxième feuille souple 12 est choisi de telle sorte que la face externe 20 de cette deuxième feuille 12 puisse être imprimable, c'est-à-dire puisse faire office de support impression, par exemple pour recevoir des inscriptions communes ou variables, à la façon d'une page de document officiel. En outre, le matériau constitutif de la deuxième feuille souple 12 est de préférence d'un type dit sécurisé, c'est-à-dire approprié pour résister aux tentatives de falsification. Par exemple, il s'agit d'un papier de sécurité ayant une densité d'au moins 90 g/m² et une épaisseur de l'ordre de 100 µm à 120 µm, par exemple un papier de sécurité référence CBS1 de densité de 95 g/m² commercialisé par la société LANDQART (Postfach, Suisse).

Cette deuxième feuille 12 est collée sur la première feuille souple 1 grâce à une couche d'adhésif 13, qui peut être un adhésif sensible à la pression à froid ou un adhésif posé par laminage à chaud ou autre. La couche d'adhésif 13 vient compléter latéralement la pastille 9 jusqu'au format de la première feuille souple 1 et sur au moins une partie de l'épaisseur de cette pastille 9. Elle constitue ainsi une compensation d'épaisseur et de format par rapport à la pastille 9.

De préférence, cette couche d'adhésif 13 présente, une fois posée, une épaisseur supérieure à 100 µm, par exemple de l'ordre de 180 µm, de façon à minimiser toute surépaisseur visible de la pastille 9. Avantageusement, cette feuille adhésive 12, 13, et tout particulièrement la couche d'adhésif 13, est adaptée pour être localement déformable en compression pour absorber la surépaisseur formée par la pastille 9.

La feuille adhésive 12, 13, et plus particulièrement la deuxième feuille 12, présentent de préférence une rigidité en flexion inférieure à celle de la pastille 9. En outre, sa rigidité en flexion est aussi inférieure ou égale à celle de la première feuille souple 1 de façon à ne pas modifier sensiblement la souplesse en flexion de la vignette selon l'invention.

Cette feuille adhésive 12, 13 permet d'une part de compenser le format de la pastille 9, d'autre part de renforcer la vignette selon l'invention (sans néanmoins modifier sensiblement sa souplesse) et de protéger l'antenne 2 et le microcircuit 8. Cette feuille adhésive 12, 13 est appliquée en dernier lieu, à recouvrement de l'antenne 2, de la pastille 9 et du microcircuit 8.

Ainsi, il est à noter que la feuille adhésive 12, 13 recouvre le microcircuit 8, la couche d'adhésif 13 pénétrant dans l'espace situé entre la lumière centrale 19 de la pastille 9 et le microcircuit 8. De la sorte, la protection du microcircuit 8 est renforcée.

La pastille 9 peut être remplacée et/ou complétée par au moins une bande de renfort périphérique de vernis imprimée autour du microcircuit 8. Une telle bande de renfort périphérique de vernis peut être imprimée simultanément à la bande de vernis isolant 5, avec le même vernis. Elle présente alors une épaisseur à partir du support souple 1 inférieure à celle du microcircuit 8. Néanmoins, la couche d'adhésif 13 vient compléter l'épaisseur de ladite bande de renfort périphérique, cette couche d'adhésif 13 se déformant pour recevoir la partie saillante du microcircuit 8 et absorber son épaisseur sans créer de surépaisseur visible.

La vignette selon l'invention comprend également des motifs de sécurité 17 anti-falsification et/ou d'authentification et/ou non reproductibles par lecture optique ou autres. Ces motifs de sécurité 17 peuvent être imprimés sur la face externe 20 de la deuxième feuille 12 recouvrant la pastille 9 et/ou entre la deuxième feuille 12 et la couche d'adhésif 13 lorsque la deuxième feuille 12 est formée d'une matière au moins partiellement transparente. Par exemple, de tels motifs de sécurité 17 sont des hologrammes et/ou des motifs tels que décrits par US-6336666 et/ou US-6494490 et/ou US-6592972 ou FR-2675742.

Pour réaliser une telle vignette selon l'invention, on imprime tout d'abord l'antenne de transmission 2 sur la première face 14 de la première feuille 1, puis on réalise les bornes de connexion 3, 7 en imprimant la bande de vernis isolant 5 et la bande de liaison 6, puis on pose le microcircuit 8 en le connectant aux bornes de connexion 3, 7, puis on applique la pastille 9 en logeant le microcircuit 8 dans la lumière 19, puis on lamine la feuille adhésive 12, 13 de façon à coller la deuxième feuille 12 par l'intermédiaire de l'adhésif 13 sur la petite première face 14 de la première feuille 1. On réalise ensuite la pose de la couche d'adhésif 15 sur la deuxième face 18 de la première feuille 1, que l'on recouvre d'un papier protecteur détachable 16. Toutes ces opérations peuvent être réalisées de façon groupée et en continu, comme pour la fabrication d'étiquettes traditionnelles, à partir de bandes initialement sous forme de bobines, déroulées pour réaliser les différents traitements successifs. On réalise ensuite un découpage mi-chair de chaque vignette au format souhaité dans l'épaisseur de la feuille adhésive 12, 13 de la première feuille 1 et de l'adhésif 15, le papier protecteur détachable 16 non découpé constituant en final un support continu pouvant être enroulé en une bobine comprenant une pluralité de vignettes selon l'invention. Les portions de chute des première feuille 1 et deuxième feuille 12 découpées entre les vignettes peuvent être ôtées par pelage ou non.

L'épaisseur totale d'une vignette selon l'invention est typiquement comprise entre 400 µm et 600 µm.

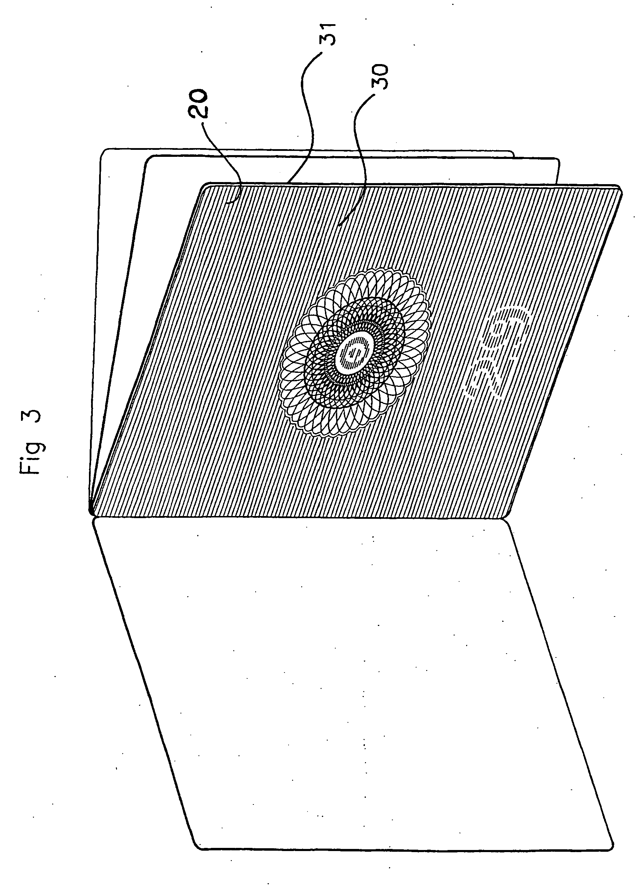

Comme représenté figure 3, une vignette selon l'invention peut être appliquée sur une page d'une feuille d'un document officiel tel qu'un passeport, à recouvrement total de cette page de façon à présenter une face externe 20 imprimable remplaçant la page initiale du document.

Ainsi, dans un procédé de traitement d'un document officiel à l'aide d'une vignette selon l'invention, on choisit une vignette 30 selon l'invention au format d'une page 31 de ce document officiel, on colle la vignette à recouvrement total de cette page 31 à l'aide de la couche d'adhésif 15 s'étendant sur la deuxième face 18 de la première feuille 1, de sorte que la vignette 30 présente une face externe 20 imprimable mimant ladite page 31 du document officiel ainsi traité. La présence de la vignette selon l'invention n'est donc pas aisément détectable. Il en va de même du microcircuit 8 qu'elle incorpore, noyé dans son épaisseur.

Il va de soi que l'invention peut faire l'objet de nombreuses variantes de réalisation par rapport au mode de réalisation préférentiel décrit ci-dessus et représenté sur les figures. En particulier, la vignette selon l'invention peut incorporer d'autres éléments de sécurité, notamment une ou plusieurs couche(s) de vernis. De préférence, chaque vignette selon l'invention comprend un et un seul microcircuit 8 connecté à une et une seule antenne de transmission 2. Rien n'empêche cependant de prévoir plusieurs microcircuits 8 et/ou plusieurs antennes de transmission 2 sur une même vignette selon l'invention.

Une vignette selon l'invention est particulièrement avantageusement applicable à la réalisation d'un passeport selon l'invention. Elle peut néanmoins également faire l'objet d'autres applications, notamment pour la réalisation et/ou la protection d'autres documents officiels tels que des cartes d'identité, des contrats...

## Revendications

1. Vignette adhésive souple de sécurité anti-falsification comprenant :
- une première feuille souple (1) dont le format correspond au moins sensiblement à celui de la vignette,
- au moins une antenne (2) de transmission à distance d'informations et/ou de signaux et/ou d'énergie pouvant être délivré(e)(s) et/ou reçu(e)(s)(es) par un microcircuit (8), cette antenne (2) de transmission présentant des bornes de connexion (3, 7) électrique associées à une première face (14) de ladite première feuille (1),
- au moins un microcircuit (8) fixé sur ladite première face (14) de la première feuille (1) de façon à être en contact électrique avec des bornes (3, 7) de connexion électrique d'une antenne (2) de transmission correspondante,
- une couche (15) d'adhésif externe recouvrant la deuxième face (18), opposée à la première face (14), de ladite première feuille (1), cette couche (15) d'adhésif externe étant adaptée pour permettre le collage de la vignette adhésive sur une face d'une feuille souple imprimable de document officiel,
**caractérisée en ce que** ladite première feuille (1) et chaque microcircuit (8) sont recouverts d'une deuxième feuille (12) souple imprimable -notamment en papier-contrecollée par l'intermédiaire d'une couche d'adhésif (13) sur ladite première face (14) de ladite première feuille (1) et sur chaque microcircuit (8), ladite couche d'adhésif (13) adhérant simultanément à l'antenne (2) de transmission et à chaque microcircuit (8) et faisant office de compensation d'épaisseur pour chaque microcircuit (8).

2. Vignette selon la revendication 1, **caractérisée en ce que** l'antenne (2) de transmission est formée d'au moins une spire d'encre conductrice imprimée sur ladite première face (14) de ladite première feuille (1) et **en ce que** lesdites bornes (3, 7) de connexion sont formées également d'une encre conductrice imprimée sur ladite première face (14) de ladite première feuille (1).

3. Vignette selon l'une des revendications 1 ou 2, **caractérisée en ce que** chaque microcircuit (8) est fixé sur ladite première face (14) de ladite première feuille (1) par collage.

4. Vignette selon l'une des revendications 1 à 3, **caractérisée en ce qu'**elle comprend au moins une couche (9) de renfort périphérique s'étendant autour d'au moins un microcircuit (8) fixé sur ladite première face (14) selon un format inférieur à celui de ladite première feuille (1), l'ensemble formé par chaque couche (9) de renfort périphérique formant à partir de ladite première face (14) de ladite première feuille(1), une épaisseur totale supérieure ou égale à celle du microcircuit (8) à partir de ladite première face (14) de ladite première feuille (1).

5. Vignette selon la revendication 4, **caractérisée en ce que** l'ensemble formé par chaque couche (9) de renfort périphérique présente une rigidité en flexion supérieure à celle de ladite première feuille (1).

6. vignette selon l'une des revendications 4 ou 5, **caractérisée en ce qu'**elle comprend, à titre de couche(s) de renfort périphérique, au moins une bande de renfort périphérique de vernis imprimée en au moins une couche autour du microcircuit (8).

7. Vignette selon l'une des revendications 4 à 6, **caractérisée en ce qu'**elle comprend, à titre de couche(s) de renfort périphérique, une pastille (9) de renfort périphérique adhérant sur ladite première face (14) autour d'un microcircuit (8), ladite pastille (9) présentant un évidement (19) logeant le microcircuit (8) et ayant un format inférieur à celui de ladite première feuille (1).

8. Vignette selon la revendication 7, **caractérisée en ce que** ladite pastille (9) est formée en une matière choisie dans le groupe comprenant les polyesters, les polyméthacrylates, les polycarbonates, les polystyrènes, les polyéthylènes, les polypropylènes et les polyamides.

9. Vignette selon l'une des revendications 4 à 8, **caractérisée en ce que** l'ensemble formé par chaque couche de renfort périphérique présente une largeur hors-tout comprise entre 10 mm et 30 mm -notamment de l'ordre de 20 à 25 mm-.

10. Vignette selon l'une des revendications 4 à 9, **caractérisée en ce que** l'ensemble formé par chaque couche de renfort périphérique présente une épaisseur totale comprise entre 100 µm et 250 µm -notamment de l'ordre de 180 µm-.

11. Vignette selon l'une des revendications 1 à 10, **caractérisée en ce que** ladite deuxième feuille (12) est formée d'un papier de sécurité ayant une densité d'au moins 90 g/m².

12. Vignette selon l'une des revendications 1 à 11, **caractérisée en ce que** ladite deuxième feuille (12) porte des impressions de motifs de sécurité anti falsification sur sa face externe libre.

13. Vignette selon l'une des revendications 1 à 12, **caractérisée en ce que** la première feuille (1) et la deuxième feuille (12) sont de formats similaires correspondant à celui d'une feuille de document officiel sur laquelle ladite vignette est destinée à être apposée, notamment inférieur à A4.

14. Document officiel -notamment passeport, permis de conduire, certificat d'immatriculation de véhicule, diplôme, certificat administratif et/ou d'identification et/ou d'authentification, contrat-, **caractérisé en ce qu'**il comprend au moins une vignette (30) selon l'une des revendications 1 à 13 appliquée sur une face (31) d'une feuille souple imprimable -notamment en papier- de ce document officiel.

15. Document selon la revendication 14, **caractérisé en ce qu'**il se présente sous la forme d'un carnet.

## Patentansprüche

1. Fälschungssicheres flexibles Sicherheits-Klebeetikett, umfassend:
- ein erstes flexibles Blatt (1), dessen Format mindestens im Wesentlichen demjenigen des Etiketts entspricht,
- mindestens eine Antenne (2) zur Fernübertragung von Informationen und/oder Signalen und/oder Energie, die von einem Mikroschaltkreis (8) gesendet und/oder empfangen werden können/kann, wobei diese Übertragungsantenne (2) elektrische Anschlussklemmen (3, 7) aufweist, die mit einer ersten Seite (14) des ersten Blattes (1) assoziiert sind,
- mindestens einen Mikroschaltkreis (8), der auf der ersten Seite (14) des ersten Blattes (1) befestigt ist, um in elektrischem Kontakt mit den elektrischen Anschlussklemmen (3, 7) einer entsprechenden Übertragungsantenne (2) zu sein,
- eine äußere Klebstoffschicht (15), die die zweite Seite (18), gegenüber der ersten Seite (14), des ersten Blattes (1) bedeckt, wobei diese äußere Klebstoffschicht (15) ausgelegt ist, um das Kleben des Klebeetiketts auf eine Seite eines bedruckbaren flexiblen Blattes eines offiziellen Dokuments zu ermöglichen,
**dadurch gekennzeichnet, dass** das erste Blatt (1) und jeder Mikroschaltkreis (8) von einem zweiten bedruckbaren flexiblen Blatt (12) - insbesondere aus Papier - bedeckt sind, kaschiert mit Hilfe einer Klebstoffschicht (13) auf der ersten Seite (14) des ersten Blatts (1) und auf jedem Mikroschaltkreis (8), wobei die Klebstoffschicht (13) gleichzeitig an der Übertragungsantenne (2) und an jedem Mikroschaltkreis (8) klebt, und als Kompensierung der Dicke für jeden Mikroschaltkreis (8) dient.

2. Etikett nach Anspruch 1, **dadurch gekennzeichnet, dass** die Übertragungsantenne (2) aus mindestens einer Windung aus leitfähiger Tinte gebildet ist, die auf die erste Seite (14) des ersten Blattes (1) gedruckt ist, und dadurch, dass die Anschlussklemmen (3, 7) ebenfalls aus einer leitfähigen Tinte gebildet sind, die auf die erste Seite (14) des ersten Blattes (1) gedruckt ist.

3. Verfahren nach einem der Ansprüche 1 oder 2, **dadurch gekennzeichnet, dass** jeder Mikroschaltkreis (8) auf der ersten Seite (14) des ersten Blattes (1) durch Kleben befestigt ist.

4. Etikett nach einem der Ansprüche 1 bis 3, **dadurch gekennzeichnet, dass** es mindestens eine Schicht (9) zur peripheren Versteifung umfasst, die sich um mindestens einen Mikroschaltkreis (8) erstreckt, der auf der ersten Seite (14) in einem geringern Format als demjenigen des ersten Blattes (1) befestigt ist, wobei die Einheit, gebildet aus jeder Schicht (9) zur peripheren Versteifung aus der ersten Seite (14) des ersten Blattes (1), eine Gesamtdicke bildet, die größer oder gleich derjenigen des Mikroschaltkreises (8) aus der ersten Seite (14) des ersten Blattes (1) ist.

5. Etikett nach Anspruch 4, **dadurch gekennzeichnet, dass** die Einheit, gebildet aus jeder Schicht (9) zur peripheren Versteifung, eine Biegesteifigkeit aufweist, die größer als diejenige des ersten Blatts (1) ist.

6. Etikett nach einem der Ansprüche 4 oder 5, **dadurch gekennzeichnet, dass** es als Schicht(en) zur peripheren Versteifung mindestens ein Band zur peripheren Versteifung aus Lack umfasst, das auf mindestens einer Schicht um den Mikroschaltkreis (8) gedruckt ist.

7. Etikett nach einem der Ansprüche 4 bis 6, **dadurch gekennzeichnet, dass** es als Schicht(en) zur peripheren Versteifung eine Platte (9) zur peripheren Versteifung umfasst, die auf der ersten Seite (14) um einen Mikroschaltkreis (8) klebt, wobei die Platte (9) eine Aussparung (19) umfasst, die den Mikroschaltkreis (8) aufnimmt und ein Format aufweist, das kleiner als dasjenige des ersten Blattes (1) ist.

8. Etikett nach Anspruch 7, **dadurch gekennzeichnet, dass** die Platte (9) aus einem Material gebildet ist, ausgewählt aus der Gruppe bestehend aus Polyestern, Polymethacrylaten, Polycarbonaten, Polystyrenen, Polyethylenen, Polypropylenen und Polyamiden.

9. Etikett nach einem der Ansprüche 4 bis 8, **dadurch gekennzeichnet, dass** die Einheit, gebildet aus jeder Schicht zur peripheren Versteifung, eine Gesamtbreite zwischen 10 mm und 30 mm aufweist - insbesondere im Bereich von 20 bis 25 mm.

10. Verfahren nach einem der Ansprüche 4 bis 9, **dadurch gekennzeichnet, dass** die Einheit, gebildet aus jeder Schicht zur peripheren Versteifung, eine Gesamtdicke zwischen 100 µm und 250 µm aufweist - insbesondere im Bereich von 180 µm.

11. Etikett nach einem der Ansprüche 1 bis 10, **dadurch gekennzeichnet, dass** das zweite Blatt (12) aus einem Sicherheitspapier gebildet ist, das eine Dichte von mindestens 90 g/m² aufweist.

12. Verfahren nach einem der Ansprüche 1 bis 11, **dadurch gekennzeichnet, dass** das zweite Blatt (12) Aufdrucke von fälschungssicheren Sicherheitsmotiven auf seiner freien äußeren Seite trägt.

13. Verfahren nach einem der Ansprüche 1 bis 12, **dadurch gekennzeichnet, dass** das erste Blatt (1) und das zweite Blatt (12) ein ähnliches Format aufweisen, das demjenigen eines Blattes eines offiziellen Dokuments entspricht, auf das das Etikett aufgebracht werden soll, insbesondere kleiner als A4.

14. Offizielles Dokument - insbesondere Reisepass, Führerschein, Kraftfahrzeugzulassungsschein, Diplom, amtliche Bescheinigung und/oder Nämlichkeitszeugnis und/oder Beglaubigung, Vertrag - **dadurch gekennzeichnet, dass** es mindestens ein Etikett (30) nach einem der Ansprüche 1 bis 13 umfasst, aufgebracht auf eine Seite (31) eines bedruckbaren flexiblen Blatts - insbesondere aus Papier - dieses offiziellen Dokuments.

15. Dokument nach Anspruch 14, **dadurch gekennzeichnet, dass** es die Form eines Heftes aufweist.

## Claims

1. Flexible adhesive vignette for anti-falsification security, including:
- a first flexible sheet (1), the size of which corresponds at least substantially to that of the vignette,
- at least one antenna (2) for remote transmission of information and/or signals and/or energy capable of being supplied and/or received by a microcircuit (8), this transmission antenna (2) exhibiting electrical-connection terminals (3, 7) linked to a first face (14) of said first sheet (1),
- at least one microcircuit (8) fixed to said first face (14) of the first sheet (1) in such a manner as to be in electrical contact with electrical-connection terminals (3, 7) of a corresponding transmission antenna (2),
- a layer (15) of external adhesive covering the second face (18), opposite the first face (14), of said first sheet (1), this layer (15) of external adhesive being suitable to enable the gluing of the adhesive vignette onto a face of an imprintable flexible sheet of an official document,
wherein said first sheet (1) and each microcircuit (8) are covered with a second imprintable flexible sheet (12) - notably made of paper - pasted by means of a layer of adhesive (13) onto said first face (14) of said first sheet (1) and onto each microcircuit (8), said layer of adhesive (13) adhering simultaneously to the transmission antenna (2) and to each microcircuit (8) and serving as thickness compensation for each microcircuit (8).

2. Vignette as claimed in Claim 1, wherein the transmission antenna (2) is constituted by at least one whorl of conductive ink printed on said first face (14) of said first sheet (1) and wherein said connection terminals (3, 7) are also constituted by a conductive ink printed on said first face (14) of said first sheet (1).

3. Vignette as claimed in one of Claims 1 or 2, wherein each microcircuit (8) is fixed to said first face (14) of said first sheet (1) by gluing.

4. Vignette as claimed in one of Claims 1 to 3, wherein it includes at least one layer (9) for peripheral reinforcement extending around at least one microcircuit (8) fixed to said first face (14) according to a size smaller than that of said first sheet (1), the whole formed by each layer (9) for peripheral reinforcement forming, starting from said first face (14) of said first sheet (1), a total thickness greater than or equal to that of the microcircuit (8), starting from said first face (14) of said first sheet (1).

5. Vignette as claimed in Claim 4, wherein the whole formed by each layer (9) for peripheral reinforcement exhibits a flexural rigidity greater than that of said first sheet (1).

6. Vignette as claimed in one of Claims 4 or 5, wherein it includes, by way of layer(s) for peripheral reinforcement, at least one peripheral-reinforcement strip of varnish printed in at least one layer around the microcircuit (8).

7. Vignette as claimed in one of Claims 4 to 6, wherein it includes, by way of layer(s) for peripheral reinforcement, a disc (9) for peripheral reinforcement adhering to said first face (14) around a microcircuit (8), said disc (9) exhibiting a recess (19) accommodating the microcircuit (8) and having a size smaller than that of said first sheet (1).

8. Vignette as claimed in Claim 7, wherein said disc (9) is formed in a material chosen from the group comprising polyesters, polymethacrylates, polycarbonates, polystyrenes, polyethylenes, polypropylenes and polyamides.

9. Vignette as claimed in one of Claims 1 to 8, wherein the whole formed by each layer for peripheral reinforcement exhibits an overall width of between 10 mm and 30 mm - notably of the order of 20 to 25 mm -.

10. Vignette as claimed in one of Claims 1 to 9, wherein the whole formed by each layer for peripheral reinforcement exhibits a total thickness of between 100 µm and 250 µm - notably of the order of 180 µm -.

11. Vignette as claimed in one of Claims 1 to 10, wherein said second sheet (12) is constituted by a security paper having a density of at least 90 g/m².

12. Vignette as claimed in one of Claims 1 to 11, wherein said second sheet (12) bears impressions of motifs for anti-falsification security on its free outer face.

13. Vignette as claimed in one of Claims 1 to 12, wherein the first sheet (1) and the second sheet (12) are of similar size corresponding to that of a sheet of an official document on which said vignette is intended to be affixed - notably of a size smaller than A4.

14. Official document - notably passport, driving licence, vehicle registration certificate, diploma, administrative certificate and/or identification certificate and/or authentication certificate, contract - wherein it includes at least one vignette (30) as claimed in one of Claims 1 to 13 applied on a face (31) of an imprintable flexible sheet - notably made of paper - of this official document.

15. Document as claimed in Claim 14, wherein it takes the form of a notebook.
